# EUROPEAN PATENT SPECIFICATION

(11) **EP 3 108 405 B1**
(45) Date of publication and mention of the grant of the patent: **13.04.2022**
(21) Application number: 15706757.0
(22) Date of filing: 19.02.2015
(51) Int. Cl.: G06K 9/00

(54) **A SYSTEM FOR USE IN A VEHICLE**
SYSTEM ZUR VERWENDUNG IN EINEM FAHRZEUG
SYSTÈME DESTINÉ À ÊTRE UTILISÉ DANS UN VÉHICULE

(30) Priority: 21.02.2014 GB 201403066
(43) Date of publication of application: 28.12.2016
(73) Proprietor: Jaguar Land Rover Limited, Coventry, Warwickshire CV3 4LF (GB)
(72) Inventor: MURTHY, Niranjan, Coventry Warwickshire CV3 4LF (GB); WELLS, Andy, Coventry Warwickshire CV3 4LF (GB)
(74) Representative: Holmes, Matthew William
(86) International application number: PCT/EP2015/053539
(87) International publication number: WO 2015/124694

(56) References cited:
- EP-A1- 1 503 354
- WO-A1-2013/017125
- JP-A- 2009 110 394
- JP-A- 2012 068 962
- US-A1- 2010 328 644
- US-A1- 2013 049 988
- US-B1- 6 587 755
- ESTABLE S ET AL: "A Real-Time Traffic Sign Recognition System", 19941024; 19941024 - 19941026, 24 October 1994 (1994-10-24), pages 213-218, XP010258339,
- PAPADIMITRATOS P ET AL: "Vehicular communication systems: Enabling technologies, applications, and future outlook on intelligent transportation", IEEE COMMUNICATIONS MAGAZINE, IEEE SERVICE CENTER, PISCATAWAY, US, vol. 47, no. 11, 1 November 2009 (2009-11-01), pages 84-95, XP011284159, ISSN: 0163-6804, DOI: 10.1109/MCOM.2009.5307471

## Description

### FIELD OF THE INVENTION

The present disclosure relates to a system for use in a vehicle, and in particular, but not exclusively, in vehicles intended to be driven on highways, motorways and other roads where road signs are likely to be encountered. The present disclosure also relates to a vehicle incorporating such a vehicle system and to a method of aiding driving of such a vehicle.

Aspects of the invention relate to a system, to a method and to a vehicle.

### BACKGROUND

When driving on highways, motorways or other roads where multiple road signs or advertisement boards are encountered on the road side or overhead on gantries, a driver is often faced with a large amount of information concerning routes, directions, obstructions or points of interest in a short space of time. This can present a driving hazard for the driver, causing them to be distracted by trying to observe multiple signs in quick succession.

It is against this background that the present invention has been conceived. Embodiments of the invention may provide a method or a system that aids driver road use. Other aims and advantages of the invention will become apparent from the following description, claims and drawings.

JP2009110394 relates to a system for identifying and communicating road sign information to a driver. The system includes a camera, processing units and a display device. The camera is configured to acquire images ahead of the vehicle which include road signs. The processing units are configured to recognise the road signs from the captured images and organise a database of recognised signs.

### SUMMARY OF THE INVENTION

Aspects of the invention provide a system, a method and a vehicle as claimed in the appended claims.

According to one aspect of the present invention, there is provided a system for use in a vehicle; the system comprising image capture means for capturing image scene data from an image scene external to the vehicle, wherein the image scene includes a plurality of information indicators, each of which occurs in a corresponding region of the image scene and each of which includes text and/or a symbol; image processing means for generating multiple information outputs, each of which corresponds to at least one of the plurality of information indicators; assignment means for assigning a priority to the multiple information outputs according to at least one pre-determined criterion; and means for communicating the multiple information outputs to the user in dependence on the assigned priority. Wherein the or each of the information indicators has an orientation, wherein the pre-determined criterion includes the orientation of the information indicator, wherein the image processing means is configured to analyse the captured image scene data to determine whether the one or more information indicators is oriented at an oblique angle, and wherein an information indicator that is oriented at an oblique angle is assigned a low priority.

Advantageously, the image processing means is arranged to determine whether one or more information indicators are oriented away from the vehicle. In this way, the processing means can determine whether a sign belongs to the vehicle's path of travel. Accordingly, the pre-determined criterion may be an orientation of the information indicator to which an information output relates, and wherein an information indicator that is oriented away from the vehicle is assigned a low priority or disregarded.

The system may aid driver road use by providing the driver with an announcement or other presentation of information contained in road signs above or to the side of the road in a helpful manner. The system may be configured to provide the announcement or other presentation of information according to an assigned priority based on a predetermined criterion. In this way the driver is provided with a sequence of useful announcements or presentations which aid decision making about imminent turnings, obstacles or points of interest. When confronted with a number of different road signs on the side of the road, for example, particularly when in quick succession, a vehicle driver can be faced with 'information overload'. Embodiments of the present invention may ease this burden of information by presenting the information to the driver in a helpful sequence which prioritises signs that are most relevant to the current driving circumstances.

For the purpose of this specification, the phrase "information indicator" is intended to refer to any alphanumeric character or other symbol which is of the type typically carried on signage, electronic or other display boards, advertisement boards or any other hoarding, or road marking, to convey meaning or instruction to a vehicle user whilst travelling in a vehicle and includes, for example, characters in the form of road names and numbers, road markings, directional information, road exit or junction numbers, distances, road sign symbols, place names and speed limits. Typically such signage, for example, is located on the road side or on an overhead gantry above the road.

In one embodiment, the pre-determined criterion/criteria includes the relative positions of the corresponding regions in the image. In this case, the priority may be assigned in the order in which the vehicle passes the corresponding regions in the image.

For example, for signage on an overhead gantry, the multiple information outputs corresponding to different regions of the overhead gantry may be assigned a priority from left to right (or vice versa, depending on the local hand of drive).

In an alternative embodiment, each of the information indicators has a type, and the pre-determined criterion/criteria includes the type of information indicator. The type may be selected from a group comprising: instruction, warning and information, and priority may be assigned by type according to a priority order of (i) instruction, (ii) warning, (iii) information.

The pre-determined criterion may be a vehicle-specific restriction. In this case, the means for assigning a priority may be arranged to assign a low priority or to disregard a restriction which does not apply to the vehicle. This beneficially avoids troubling the driver with signs that are of no relevance to him and which would be an unnecessary distraction.

Alternatively, the pre-determined criterion/criteria may include a time-specific restriction, in which case the assignment means may be arranged to assign a low priority to or to disregard a restriction that is not currently in effect. This also has the effect of avoiding presenting signs to the driver that are of no relevance to the current driving circumstances.

In one embodiment, the system comprises user selection means for enabling user selection of a region of the image scene, and wherein the means for communicating is further configured to communicate the information output corresponding to the region in accordance with the user selection.

This provides the driver with the facility to view road sign information which may have been unclear when the sign was first passed, or which the driver may have missed when viewing the road sign directly, by selecting the region in the image scene containing the road sign that was unclear or missed.

The vehicle may have a selected vehicle language in which communications are to be carried out between a vehicle user and the system and wherein at least one of the information indicators includes text in a country language other than the selected vehicle language. In this case, the system may comprise means for outputting a vehicle language signal representative of the vehicle language to a remote server; means for outputting a country language signal to the remote server which is representative of the country language of the text included in the information indicator; means for outputting the information output to the remote server for translation of the text from the country language into the vehicle language; and means for receiving a translated text output from the remote server which is representative of the translated text. The means for communicating is configured to communicate the translated text output to the vehicle user.

It is beneficial for the translation process to be performed remotely or externally to the vehicle computer system so as to reduce the processor power and the data memory that is required for the on-board computer. This embodiment provides the advantage that the translation software need not be stored on the vehicle itself, but is stored on the remote server. This reduces the processing requirements of the on-board vehicle computer.

In another embodiment, the system may comprise means for translating the text from a country language into the vehicle language, where the country language is the language other than the vehicle language, and for generating a translated text output representative of the translated text; wherein the means for communicating is configured to communicate the translated text output to the vehicle user.

This embodiment provides an advantage in circumstances in which there is a wireless 'black spot' or communication between the vehicle and an external server system is relatively weak, as the user can still be presented with a translation of the imaged text via an on-board translation processor.

The information indicator may include a symbol, the system comprising means for deriving a symbol meaning from the symbol. The means for communicating may be configured to communicate the symbol meaning to the vehicle user.

In another embodiment, the system may comprise means for outputting the symbol to an off-board (remote) server for interpretation and means for receiving an interpretation representative of the symbol from the remote server. Again, in this case, the means for communicating may be configured to communicate the interpretation of the symbol to the vehicle user.

The information output may be communicated to the user visually or audibly, or both. The communication means may be selectable by the user as a preference via, for example, a human machine interface (HMI).

The information indicator may be comprised in a road sign in the image scene. Alternatively, or in addition, the information indicator may be comprised in an advertisement board in the image scene. The information indicator may be comprised in any signage, hoarding or other display in the vicinity of the road e.g. to the side of the road or above the road on an overhead gantry.

In one embodiment, the communication means includes an audio system. The audio system may, for example, comprise multiple speakers each in a different position in the vehicle.

In one embodiment, for example, the means for communicating may be further configured to communicate the information outputs through the speakers according to the position of the speakers in the vehicle.

In another embodiment, the communication means may include, in addition or as an alternative, a visual display screen.

The system may comprise means for enabling user selection of the type of communication means.

According to another aspect of the invention, there is provided a method for use in a vehicle; the method comprising capturing an image scene external to the vehicle, wherein the image scene includes a plurality of information indicators, each of which occurs in a corresponding region of the image scene and each of which includes text and/or a symbol; generating multiple information outputs, each of which corresponds with one of the plurality of information indicators; assigning a priority to the multiple information outputs according to at least one pre-determined criterion; and communicating the multiple information outputs to the user in dependence on the assigned priority. Wherein the or each of the information indicators has an orientation, wherein the pre-determined criterion includes the orientation of the information indicator, wherein the method comprises analysing the captured image scene to determine whether the one or more information indicators is oriented at an oblique angle, and wherein an information indicator that is oriented at an oblique angle is assigned a low priority. According to another aspect, the invention relates to a vehicle comprising the system as set out in any of the aforementioned statements.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination within the scope of the claims. That is, all embodiments and/or features of any embodiment can be combined in any way and/or combination within the scope of the claims, unless such features are incompatible.

### BRIEF DESCRIPTION OF DRAWINGS

Embodiments of the present invention will now be described, by way of example only, with reference to the following figures in which:
Figure 1 shows a schematic diagram of a vehicle system in accordance with a first embodiment of the invention, including a vehicle camera system for capturing an image scene;
Figure 2 is an example of an image scene which may be captured by the vehicle camera system in Figure 1 as the vehicle travels on its journey;
Figure 3 is an example of an alternative image scene which may be captured by the vehicle camera system in Figure 1 as the vehicle travels on its journey;
Figure 4 is an example of a road sign which may be captured in an image scene, the road sign including both text and symbol information;
Figure 5 is a flow diagram to illustrate the steps of a method of extracting symbol and text information from a road sign in an image scene captured by the vehicle camera system;
Figure 6 is a flow diagram to illustrate the steps of an alternative method to that illustrated in Figure 5; and
Figure 7 shows a schematic diagram of a vehicle system in accordance with an alternative embodiment of the invention to that shown in Figure 1.

### DETAILED DESCRIPTION

A vehicle typically includes an on-board vehicle computer system 10 which controls various vehicle settings, either automatically in response to sensor outputs from various vehicle sensors, or in response to user-initiated commands. Forming part of the vehicle computer system 10 is an infotainment system which enables audio and visual in-vehicle entertainment services to be provided to the vehicle user via in-vehicle radio and television systems (not shown), respectively. The vehicle computer system also includes a satellite navigation system (not shown) and, optionally, a driver assist system such as Terrain Response^{®}.

The vehicle is fitted with a location indicator means in the form of a global position sensor 12 which establishes an indication of the current vehicle position through communication with an external positioning system (not shown). The global position sensor 12 may form part of the vehicle computer system 10 and provides an output signal 14 to the computer system 10 to provide an indication of the vehicle's position. The output signal 14 is also used in particular as an input to the satellite navigation system.

The on-board computer system 10 may consist solely of hardware and embedded software carried on the vehicle, and forming an integral part of the vehicle at the time of purchase, or may in part or in full be provided by a device that is carried on-board the vehicle, such as the driver's personal device (e.g. a tablet or mobile phone), which is also used for other purposes off-board the vehicle. With this in mind, the invention may be embodied in an application running on a vehicle user's personal mobile device.

The computer system 10 derives a corresponding country indicator signal from the position signal to provide an indication of the country in which the vehicle is travelling. The country indicator signal may be derived from a look-up table stored on the computer system 10.

If the computer system 10 is embodied in part or in full within the mobile device carried by the user within the vehicle, the mobile device may be used to generate the country signal. A mobile device typically communicates with a mobile network operator, so as to enable a determination of which cell of the local area network the vehicle is travelling in.

The language of the vehicle is set via a vehicle language set function 16 at the time the vehicle is purchased, and corresponds to the language in which the user wishes to communicate. A vehicle language signal 18 is provided to the computer system 10 from the vehicle language set function 16. The vehicle also includes a microphone 20 to allow a vehicle user to issue voice commands to the computer system 10, or to allow interaction with the user's telephone when operating through the computer system via a wireless connection (e.g. Bluetooth^{®}).

The vehicle also includes a human machine interface (HMI) 22 via which the driver can enter or control various vehicle settings, such as the inputs to the infotainment system and including inputs to the satellite navigation system. For this purpose the HMI 22 is provided with a user input interface 24. The HMI 22 also includes a display means, typically in the form of an LCD display screen 26, for displaying information to the vehicle driver about the various vehicle settings or attributes. The HMI 22 communicates with the vehicle computer via output signals 28. The vehicle also includes an audio system 30 which is responsive to a control output signal 32 from the vehicle computer system 10.

The language of the vehicle is set at the time the vehicle is purchased, and corresponds to the language in which the user wishes to communicate with the HMI 22 (for example, English, German, French). The language signal 18 is input to the vehicle computer system 10 so that communications, such as instructions and other prompts, are output to the driver in the correct language via the HMI 22 display 26 and/or the audio system 30, as will be described in further detail later.

The front of the vehicle is fitted with a camera system 40 for capturing image data from an image scene as the vehicle travels on a journey. The camera system 40 provides image scene data to the computer system via output signals 42. The computer system 10 includes a processor means for processing the image data captured by the camera system. For the purpose of processing image data the computer system includes an image processor 44, a sign-symbol-text (SST) identification processor 46, a text-to-speech (TTS) processor 48 and a priority handling processor 49. The computer system 10 also includes a data store or memory 50 in which data provided to the computer system 10 may be stored, temporarily or permanently.

The on-board computer system 10 communicates with an external or remote server 52, arranged off-board the vehicle, via an internet service provider 54 in a conventional manner via a wireless connection 56.

If the vehicle is being driven in a country or territory where the language is not the same as the selected language of the vehicle, as indicated by the vehicle language signal 18, the system is operable to capture image data from road signs carrying text in the foreign language, and to enable translation of text in the image data. The system is further operable to enable interpretation of symbols carried by the road signs, which symbols may be unfamiliar to the driver especially travelling in a country other than his own country. The translation of the text and the interpretation of the symbols can be communicated to the driver to aid safe and convenient driving.

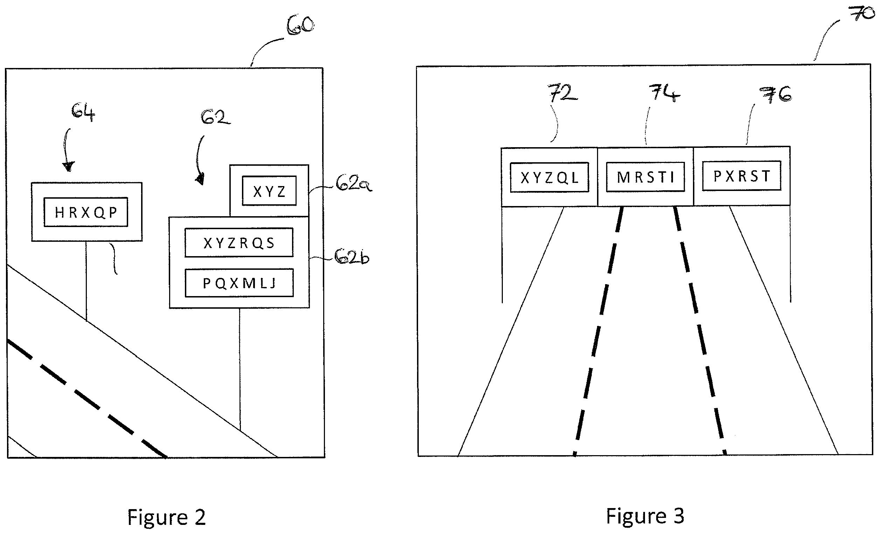

Referring to Figure 2, there is shown an example of an image scene 60 which may be captured by the vehicle camera system 40 as the vehicle travels on its journey. The image scene 60 includes first and second road signs 62, 64, the first road sign 62 consisting of first and second sign regions 62a, 62b each carrying text and the second road sign 64 consisting of a single region of text. The text on the road signs 62, 64 may, for example, relate to general information in the form of a place name or tourist attraction, a direction, or an exit on the road being travelled. Alternatively, text may take the form of a mandatory instruction and/or a prohibition.

Typically, for example, in England, Wales and Scotland, road signs are assigned a category according to the Highway Code, with the shape and colour of the sign then being related to the category of sign. Signs containing information, such as direction signs for example, are typically rectangular. Signs that give instructions are typically circular, and signs giving warnings are typically triangular, with both warnings and instructions often having a red border.

In many scenarios it is desirable to assign a priority to road signs, as some require immediate action, others provide more general information and some may not be applicable at all to the current driving circumstances. Accordingly, embodiments of the present invention embrace methods by which a group of road signs may be prioritised so as to be presented to the driver in a sensible sequence, with information contained in higher priority signs presented first, followed by lower priority signs. In this way, the sign type acts as a pre-determined criterion by which a priority is assigned.

In one embodiment, the on-board computer system 10 is arranged to prioritise a group of road signs according to sign type, for example by reference to the Highway Code standards described above. This function is performed by the priority handling processor 49. In this arrangement, signs relating to instructions are assigned a high priority and are presented to the driver first. Signs containing warnings are given a mid-level priority, and signs giving directions and other information are assigned a low priority, and are presented last.

As will be described below, the priority handling processor 49 cross-references each sign detected against a database of all standard signs in order to determine what the sign relates to. As part of this process, the processor 49 can determine the category of sign. To aid this process, the processor 49 may implement a set of rules in order to determine the category of sign more quickly. For example, the shape of the sign can be identified, and circular or triangular signs, which are likely to constitute orders or warnings, are presented to the driver ahead of rectangular signs.

A further consideration in terms of assigning priority to signs is that the camera system 40 may detect signs that are not on the path along which the vehicle is travelling. This could happen, for example, when passing a motorway slip-road, which is typically in close proximity to the motorway; signs on the slip-road could be caught in an image captured by the camera system 40. It is undesirable to present such signs to the driver, as this would cause an unnecessary distraction.

To address this, the computer system 10 is arranged to analyse images provided by the camera system 40 to determine whether a sign is oriented at an oblique angle, which would be indicative that the sign is not facing the vehicle directly. If a sign is found to be at an oblique angle, it is assigned a low priority by the computer system 10 or is disregarded by the computer system 10 altogether. In an embodiment, the computer system 10 uses the output signal 14 from the global position sensor 12 to indicate the path of the vehicle, and therefore aid in determining whether a particular sign is aimed at the driver.

For signs that have been knocked and so present to the vehicle at an oblique angle inadvertently, the system may use GPS information to confirm whether the sign has been knocked and so should be presented to the driver as being of genuine interest, or whether the sign is at an oblique angle and so should be disregarded.

Other situations in which it is desirable for the computer system 10 to disregard signs that are detected, or assign them a low priority, is when a sign is specific to certain types of vehicle not including the vehicle in question. Examples of this include warnings of restrictions based on the height or weight of a vehicle. The computer system 10 is pre-programmed with the height and weight of the vehicle, and so can determine whether the vehicle is clear to proceed. If so, the sign is given a low priority, or disregarded altogether to save troubling the driver unnecessarily with information that is not relevant. Another example of a sign which can be safely ignored is one indicating a bus lane restriction according to the time of day, where the current time falls outside the restriction. The skilled reader will appreciate that there are several further examples of signs which can be assigned a low priority or disregarded in this manner.

The camera system 40 captures the image data from the scene and outputs the image data to the image processor 44. The image processor 44 processes the data and supplies this to the SST processor 46. The SST processor 46 determines whether a sign is present in the image scene. If a sign is identified, image data relating to the sign element of the image undergoes a symbol identification step, to determine whether a symbol is present on the sign. The image data also undergoes a text identification step, to determine whether there is text present on the sign. In the example of Figure 2, there is no symbol to identify on either of the road signs 62, 64, only text.

For the road sign indicated in Figure 2, the text on the first and second sign regions 62a, 62b of the first road sign 62, and the text on the second road sign 64, is extracted from the image data for translation purposes. In the data store 50, the text indications are assigned with the respective positions in the image scene at which the road signs 62, 64 appear. The numerical assignations for the different regions of the signs are useful for presentation purposes, as will become clear from the following description.

The text indications are output to the external server 52 together with a country indicator signal (not shown) corresponding to vehicle location, as derived from the global position sensor 12, which identifies the country in which the vehicle is travelling. The country indicator signal provides an indication of the language of the text on the road signs 62, 64. The country indicator signal is transmitted, via wireless communication, to a text translation processor hosted on the external server 52. The vehicle language signal 18 which is received by the computer system 10 is also transmitted to the external server 52 via wireless communication. The external server 52 therefore receives data corresponding to the text in the road signs in the image scene, a country indicator signal and a vehicle language signal.

The text received at the external server 52 is translated by the text translation processor on the external server 52 where it is converted from the country language (as indicated by the country indicator signal) into the vehicle language (as indicated by the vehicle language signal). Data corresponding to the translated text is communicated back to the computer system 10 via wireless communication. The data corresponding to the translated text is input to the TTS processor 48 on the on-board computer where it is converted into a text signal compatible with the audio system 30 to enable an audible presentation of the translated text to the driver through speakers of the audio system. The translated text is also converted into a text signal which is compatible with the HMI display 26 so that the translated text can be presented to the driver visually. The HMI display 26 presents to the driver a selection screen to allow him to select, via the user input means 24, whether to hear announcements relating to the road sign information audibly, or to be presented with a visual display of information, or whether to be presented with both.

Data corresponding to the translated text is stored in the data memory 50 on the computer system so that it can be accessed at a later date, if required. The translated text data is stored in combination with the image scene data so that the driver can select from previous image scenes captured by the camera system 50 to retrieve the required text information, as described in further detail below.

For a visual presentation of the translation, each area of text in the road signs 62, 64 may be assigned a different number indication in the data store 50. The user is then presented on the display screen 26 with a look-up table showing which number indication corresponds to which region of text in the road signs 62, 64. For example, the first region 62a of the first road sign 62 may be assigned number 1, the second region 62b of the first road sign 62 may be assigned number 2 and the second road sign 64 may be assigned number 3. The selection screen includes a list of three text translations corresponding to 1, 2 and 3, to allow the driver to correlate the road signs in the image with the appropriate translated text.

As an alternative, or in addition, the driver may be provided with an audible announcement of the text translation in response to making a selection of the particular region of the sign that he is interested in. For example, the driver may select to hear an audible announcement relating to the first region 62a of the first road sign 62 by selecting number 1, or may select to hear an announcement relating to the second road sign 64 by selecting number 3.

In a variation, and in accordance with an embodiment of the invention, the driver may be presented with announcements corresponding to the translated text in the order in which the vehicle passes the road signs 62, 64. In this case the driver will hear announcements on his journey as he passes a road sign with text on it, without the need to make a selection. If multiple signs are present in the image scene, the order in which the vehicle passes those signs determines the sequence or order in which the corresponding information is presented to the driver, by whichever means. In other words, information relating to the sign that is passed first is presented first, information relating to the sign that is passed second is presented second, and so on and so forth. This provides a convenient and clear indication to the driver of the information in the image scene, and is particularly beneficial where there are a high number of road signs or other signage over a short distance which may otherwise confuse the driver. It also avoids the need for driver input in selecting information to be retrieved from the image scene.

The system may also be configured to allow the driver to retrieve information from the data memory 50 relating to a road sign that has been passed previously. In order to do this, the driver selects an option on the HMI display 26 to request previous road sign information. He is then presented with a series of previous images from which he can select, using the user input means 24, a previous road sign for which a translation of the text is required. The selected translation is retrieved from the data memory 50 and presented to the driver, either audibly or visually, in accordance with his selected preference.

In another embodiment the system may be configured to operate in combination with the audio system to provide announcements to the driver in dependence on the position of the road sign in the image scene 70. Referring to Figure 3, a vehicle journey may include travelling along a three-lane highway or motorway, with first, second and third overhead road signs 72, 74, 76, respectively, one above each of the three lanes.

The audio system 30 includes multiple speakers (not shown) arranged at different locations in the vehicle. Typically, for example, the audio system 30 may include a left hand front speaker, a left hand rear speaker, a right hand front speaker, a right hand rear speaker and a centre front speaker. As before, the camera system 40 captures the image scene 70 including the three overhead road signs 72, 74, 76. The data relating to the text in the road signs is output to the external server 52 for translation, together with the vehicle language signal and the country output signal. The text is translated at the external server 52 and data corresponding to the translated text is transmitted back to the computer system 10. The data corresponding to the translated text is input to the TTS processor 48 where it is converted into a text output signal compatible with the audio system, to enable an audible presentation of the translated text to the driver.

A positional indication for each road sign 72, 74, 76 is assigned to the associated text data in the data memory 50 to indicate the position of the road sign in the image scene 70. The computer system then outputs the text signals to the audio system 30 depending on the position of the text in the image scene 70. For example, the text output signal corresponding to the text of the road sign 72 above the left hand lane is output to the left hand front speaker, the text output signal corresponding to the text of the road sign 76 above the right hand lane is output to the right hand front speaker, and the text output signal corresponding to the text of the road sign 74 above the centre lane is output to the front centre speaker. The audible outputs are delivered in sequence, through one speaker at a time. The speaker through which the announcement is heard indicates to the driver which part of the image scene 70 the text is drawn from (i.e. left, right or centre).

The data corresponding to the translated text is also converted in the image processor 44 to a text output signal compatible with the HMI display 26. In the data memory, text data relating to the left hand road sign 72 is stored and assigned number 1, text data relating to the centre road sign 74 is stored and assigned number 2 and the text data relating to the right hand road sign 76 is stored and assigned number 3, as described previously. The driver is presented with a visual display of the image scene on the HMI display 26, together with the number indications 1, 2 and 3. A list of the number indications, together with the corresponding text translation, is also presented on the display 26 to allow the driver to select the road sign 72, 74 or 76 for which a repeat translation is required. The driver may select to repeat the audible announcement of the text translation or may select to be presented with the text translation visually.

In another embodiment of the invention, the system need not require any translation aspect but may be used simply to enable a driver to be presented with the text in the language of the road sign, either visually or audibly, as a reminder of a road sign that has been passed previously. This may be useful when the driver fails to read or understand fully the content of a road sign as he drives past. The camera system 40 captures image data as before and transmits the data to the computer system 10. If the global position sensor 12 indicates that the vehicle is travelling in the home country, so that there is no language issue, there is no need for the data to be transmitted to the external server 52 for translation purposes. Instead, the data is converted in the TTS processor 48 to provide a text output signal which may be output to the audio system 30. The data is also converted in the image processor 44 to provide a text output signal which is compatible with the HMI display 26. The driver is presented with an image scene on the HMI display 26, with number indications being attributed to each region of text, as described previously, to enable selection of the text for which translation is required. The translation may then be presented audibly or visually, depending on driver selection.

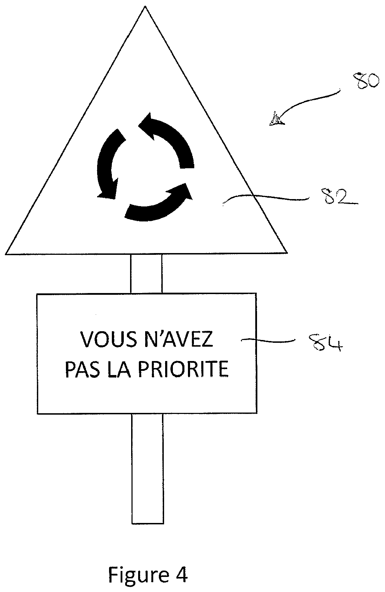

Figure 4 shows an example of a road sign 80 which may be encountered on a French road and captured in the image scene. The camera system 40 captures an image of the scene and transmits image data to the computer system 10 for processing. The road sign 80 includes a symbol 82 as well as text 84. As before, image data is processed by the SST identification processor 46 to identify that the road sign 80 appears in the image scene. The SST identification processor 46 is also operable to identify and extract data relating to the symbol 82 from the image data. The symbol is then interpreted, so that the meaning of the symbol can be presented to the driver. This is particularly useful when the driver is travelling in a country other than his home country, where road symbols are unfamiliar to him.

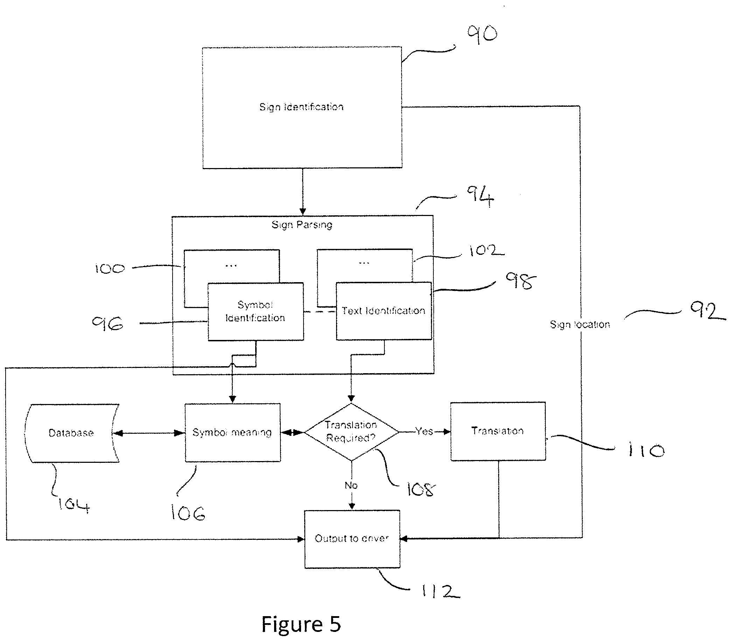

Figure 5 illustrates a flow diagram to show in further detail how the computer system 10 operates to discern meaning from a road sign 80 which incorporates both a symbol indication 82 and a text indication 84. At the sign identification step 90, the SST identification processor 46 determines that a road sign 80 is present in the image scene. The GPS sensor also provides an indication 92 to the HMI display 26 (or to the audio system) regarding the geographical location of the road sign 80.

In a subsequent sign parsing step 94, the system performs a symbol identification check 96 for symbols and a text identification step 98 for text on the sign which has been identified in the scene. The SST identification processor 46 extracts symbol data and text data from the image data, as appropriate. For the road sign 80 in Figure 4, there is only one symbol 82 and one text indication 84 to be identified, but for other road signs there may be additional symbols or text indications (as represented by the additional blocks 100 and 102). Where multiple symbols and/or text are identified, each is extracted from the data to provide an independent and separate data set for the next stage of the process.

The next stage of the process is to determine at step 108 whether translation of the symbol meaning or of the text meaning is required. If the country indicator signal indicates that the vehicle is being driven in a country where the language is not the same as the selected language of the vehicle, translation of the text indication is required.

If translation of the text indication is required, the computer system (or mobile device) also transmits the country indicator signal to the external server 52, on the basis of the global position sensor output, to indicate the country that the vehicle is travelling in (in this example, France).

In order to communicate to the user the meaning of the symbol identified in the road sign, the external server 52 carries a data memory or database 104 relating road sign symbols to their meaning for various different countries. The external server 52 looks up the meaning of the symbol in a data memory 104 which corresponds to the appropriate country (as determined from the country indicator signal) and transmits a data signal representing the symbol meaning 106 back to the computer system 10. If it has been determined at step 108 that translation of the symbol meaning is required into the selected vehicle language (i.e. because it differs from the language of the country in which the vehicle is travelling), the translation step is done at the remote server 52 prior to data relating to the meaning being transmitted back to the vehicle.

The translated output is then presented to the driver at step 112 once the TTS processor 48 has processed the symbol meaning to provide a symbol output signal that is compatible with the audio system 30. The driver therefore hears a translated audible presentation of the meaning of the symbol.

In a similar manner as for the data relating to the symbol 82, data relating to the text 84 is extracted from the image scene at step 98 (and including step 102 if there are multiple regions of text). If it is determined that the language of the country in which the vehicle is travelling is not the same as the selected language of the vehicle, the text data is transmitted to the external server 52 via wireless communication and translation of the text meaning is carried out at step 110 at the remote server 52. If the vehicle is being driven in a country where the language is the same as the selected language of the vehicle, no translation of the text indication is required and the text can simply be communicated to the driver audibly corresponding to the text in the form in which it appears on the road sign.

If translation is required, text data is transmitted to the external server 52 together with the vehicle language signal and the country indicator signal. The external server 52 looks up the data memory and provides a data signal corresponding to the translated version of the text to the computer system 10, as described previously.

If the country language signal indicates that the country in which the vehicle is travelling has more than one language, a determination is made at the external server 52 regarding which language the text is to be translated from. Alternatively, the driver may be presented with a list from which the country language can be selected for subsequent translation into the vehicle language at the external server 52.

As before, at step 112 the driver may select to hear an audible announcement of the translated text via the audio system 30 or to view a visual indication of the translated text on the HMI display 26, or he may select both options. The driver is presented with a selection screen on the HMI display 26 to enable him to select his preferred presentation method. Selection of the preferred presentation type is made via the user input device 24.

In another embodiment, the driver may be presented with an option regarding whether or not translation is to be implemented on board the vehicle, or via the external server 52.

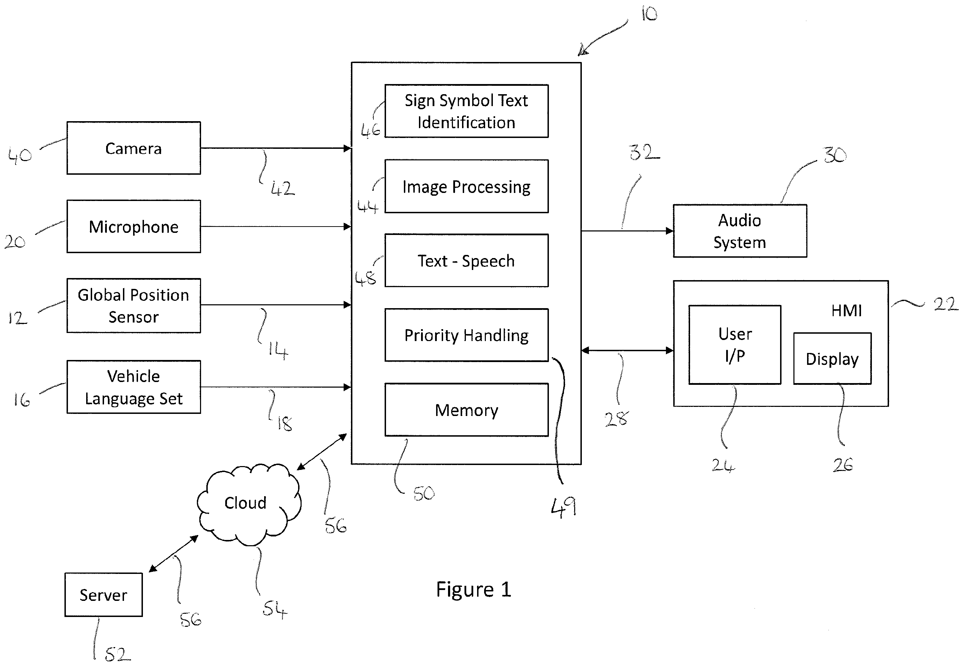

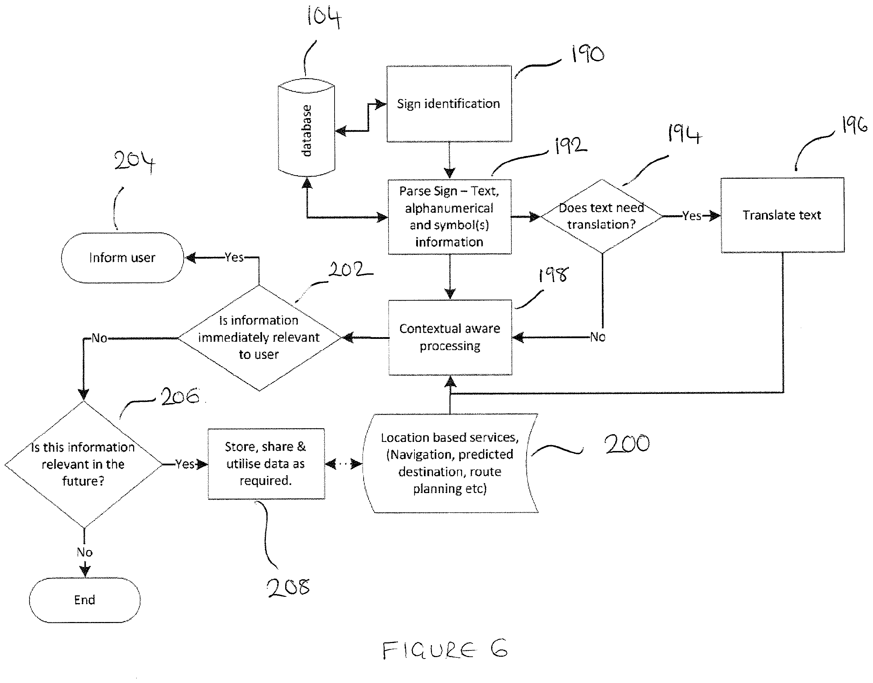

Figure 6 illustrates a modification to the method illustrated in Figure 5, in which contextual processing is implemented to determine whether information contained within the road signs is currently relevant to the vehicle, or may be relevant in the future. The computer system also accounts for navigation data, such as predicted route and destination information, to decide which information contained in the road signs should be communicated to the driver. In this case the computer system differs from that shown in Figure 1 in that it also includes a contextually aware processor (not shown).

In more detail, at the sign identification step 190, the SST identification processor 46 determines that a road sign 80 is present in the image scene. The SST identification processor 46 extracts symbol data and text data from the image data, as appropriate, at step 192. For example, for the road sign 80 in Figure 4, there is only one symbol 82 and one text indication 84 to be identified, but for other road signs there may be additional symbols or text indications. Where multiple symbols and/or text are identified, each is extracted from the data to provide an independent and separate data set for the next stage of the process.

The symbol and/or character data is communicated to the database 104 hosted on the external server 52, and a meaning of the symbols and/or characters extracted from the data set is identified. A data signal representing the symbol meaning is then communicated back to the computer system. In addition, at step 194, a determination is made about whether translation of the symbol meaning and/or text meaning is required into the selected vehicle language (i.e. because it differs from the language of the country in which the vehicle is travelling). If translation is required, this is carried out at step 196. Translation may be carried out on the computer system 10, or may be carried out on the remote server hosting the database 104. In the latter case, translation is carried out prior to the symbol meaning being transmitted back to the vehicle.

At step 198, the text and/or symbol meaning is input to the contextually aware processor. This comes from the translation step 196, if translation is required, or comes direct from step 194 if no translation is required. At step 200, the contextually aware processor also receives navigation data from the vehicle's satellite navigation system, including information relating to the user's predicted route and final destination.

A determination is then made, at steps 202 and 206, about whether the sign type is of current interest to the driver or may be of interest in the future.

At step 202, if the sign type is determined to be of immediate relevance the data is passed to the HMI to inform the user about the information contained in the sign, and including any translation which has been carried out at step 196. By way of example, if the sign is not relevant to the current time of day (e.g. road work or lane restrictions that only apply at certain times), and/or if the sign is not relevant to the predicted route or final destination, and/or if the sign is not relevant to the type of vehicle (e.g. weight or height restrictions), a determination is made at step 202 that the sign can be ignored. If the information is of immediate relevance to the current vehicle circumstances, an immediate communication is made to the user via the HMI 22 at step 204.

If a determination is made at step 202 that the information is not relevant immediately, a determination is made at step 206 about whether the information may be relevant in the future, for example considering the predicted vehicle route as determined from the satellite navigation system. If a determination is made that the information may be relevant in the future, the information is stored at step 208 for later use and communication to the driver.

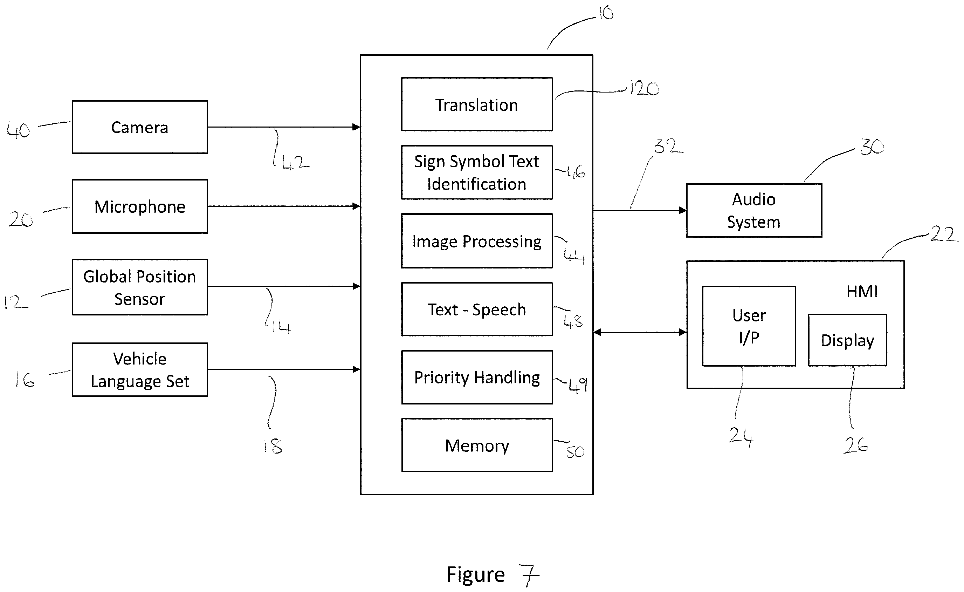

Referring to Figure 7, in another embodiment the computer system 10 need not rely on an external server 52 for the translation stages of the process, but instead may be provided with an on-board translation processor 120. In Figure 6 like parts to those shown in Figure 1 are referred to with like reference numerals. In this case, data corresponding to text in the image scene is provided to the translation processor 120 together with the country indicator signal and the vehicle language signal. The translation processor 120 translates the text into the vehicle language and outputs the appropriate text output signal to the audio system 30, if audible presentation is selected by the driver. Alternatively, an appropriate text signal is output to the HMI display 26 for visual presentation of the translated text to the driver, if the driver has selected to view the translation visually. A benefit of this embodiment is that any wireless communication 'black spots' which may exist when the vehicle is communicating with the external server 52 in Figure 1 do not result in a delay in translated information being communicated to the driver.

Without communication with the external server 52 in Figure 1, the computer system 10 also stores, in the data memory, look-up tables relating sign symbol information to meaning for various countries in the world in which the vehicle may be driven. When the camera system returns image data to the computer system 10, including data relating to text in a road sign in the image scene, the data is input to the memory 50, together with the corresponding country indicator signal, so that the corresponding meaning can be extracted from the relevant look-up table. The meaning is then either converted in the TTS processor 48 to provide an appropriate text output signal to the audio system 30 and/or an appropriate text output signal is provided to the HMI display 26, in the vehicle language, depending on the preference selected by the driver. The priority handling processor 49 may be operable to prioritise communication of the text output signals in accordance with the predetermined criteria, as described previously.

In another embodiment, the system may be configured to allow off-board as well as on-board text translation and symbol interpretation steps. For example, if the vehicle is travelling in a 'black spot' where wireless communication with the external server is lost, or provides only slow communication of data, the system may be configured to rely on the on-board text translation and symbol interpretation functions.

Other applications are envisaged where the invention provides benefit, other than the translation and interpretation of road signs. For example, the camera system on the vehicle may capture image data from billboards or advertisements, so that the system may provide the vehicle driver with a translation or interpretation of a whole host of other useful information which appears on such hoardings, such as information about places of interest, restaurants, shops and service facilities.

It will be appreciated by a person skilled in the art that the invention could be modified to take many alternative forms without departing from the scope of the appended claims.

## Claims

1. A system for use in a vehicle; the system comprising:
image capture means (40) for capturing image scene data from an image scene (60) external to the vehicle, wherein the image scene (60) includes a plurality of information indicators, each of which occurs in a corresponding region of the image scene (60) and each of which includes text or a symbol;
image processing means (10) for generating multiple information outputs, each of which corresponds to at least one of the plurality of information indicators;
assignment means for assigning a priority to the multiple information outputs according to at least one pre-determined criterion; and
means for communicating the multiple information outputs to a user of the vehicle in a sequence in dependence on the assigned priority,
**characterized in that**
the or each of the information indicators has an orientation, wherein the pre-determined criterion includes the orientation of the information indicator, wherein the image processing means is configured to analyse the captured image scene data to determine whether the one or more information indicators is oriented at an oblique angle, and wherein an information indicator that is oriented at an oblique angle is assigned a low priority.

2. A system as claimed in claim 1, wherein the pre-determined criterion includes the relative positions of the corresponding regions in the image scene (60).

3. A system as claimed in claim 2, wherein the assignment means is configured to assign priority in the order in which the vehicle passes the corresponding regions in the image scene.

4. A system as claimed in claim 1, wherein each of the information indicators has a type, and wherein the pre-determined criterion includes the type of information indicator.

5. A system as claimed in claim 4, wherein the type is selected from a group comprising: instruction, warning and information, optionally wherein priority is assigned by type according to a priority order of (i) instruction, (ii) warning, (iii) information.

6. A system as claimed in any of claims 1 to 5, comprising satellite navigation means for providing an indication of a location and/or a route of the vehicle, wherein the assignment means is configured to assign a priority to the multiple information outputs in accordance with the location and/or route.

7. A system as claimed in any one of claims 1 to 6, wherein the pre-determined criterion includes a vehicle-specific restriction, the system optionally comprising means for determining whether the one or more information indicator is specific to the vehicle, and wherein the assignment means is arranged to assign a low priority to or to disregard a restriction which is determined as not being specific to the vehicle.

8. A system as claimed in any one of claims 1 to 7, wherein the pre-determined criterion includes a time-specific restriction, optionally wherein the means for assigning a priority is arranged to assign a low priority to or to disregard a restriction that is not in effect at the current time.

9. A system as claimed in any of claims 1 to 8, wherein the information indicators are comprised in a road sign (62, 64) and/or a road marking in the image of the scene, and/or wherein the information indicators are comprised in an advertisement board in the image scene.

10. A system as claimed in any of claims 1 to 9, wherein the communication means includes an audio system (30), optionally wherein the audio system (30) has multiple speakers each having a position in the vehicle, and wherein the means for communicating is further configured to communicate the information outputs through the speakers according to the position of the speakers in the vehicle.

11. A system as claimed in any of claims 1 to 10, wherein the communication means includes a visual display screen (26), or wherein the system further comprises means for enabling user selection of the type of communication means.

12. A method for use in a vehicle; the method comprising:
capturing an image scene (60) external to the vehicle, wherein the image scene (60) includes a plurality of information indicators, each of which occurs in a corresponding region of the image scene and each of which includes text or a symbol;
generating multiple information outputs, each of which corresponds with one of the plurality of information indicators;
assigning a priority to the multiple information outputs according to a pre-determined criterion; and
communicating the multiple information outputs to a user of the vehicle in a sequence in dependence on the assigned priority,
**characterized in that**
the or each of the information indicators has an orientation, wherein the pre-determined criterion includes the orientation of the information indicator, wherein the method comprises analysing the captured image scene to determine whether the one or more information indicators is oriented at an oblique angle, and wherein an information indicator that is oriented at an oblique angle is assigned a low priority.

13. A vehicle comprising the system as claimed in any of claims 1 to 11.

## Patentansprüche

1. System zur Verwendung in einem Fahrzeug; wobei das System Folgendes umfasst:
Bilderfassungsmittel (40) zum Erfassen von Bildszenendaten aus einer fahrzeugexternen Bildszene (60), wobei die Bildszene (60) mehrere Informationsindikatoren beinhaltet, die jeweils in einem entsprechenden Bereich der Bildszene (60) auftreten und die jeweils Text oder ein Symbol beinhalten;
Bildverarbeitungsmittel (10) zum Erzeugen mehrerer Informationsausgaben, die jeweils wenigstens einem der mehreren Informationsindikatoren entsprechen;
Zuweisungsmittel zum Zuweisen einer Priorität zu den mehreren Informationsausgaben gemäß wenigstens einem zuvor bestimmten Kriterium; und
Mittel zum Kommunizieren der mehreren Informationsausgaben an einen Benutzer des Fahrzeugs in einer Sequenz in Abhängigkeit von der zugewiesenen Priorität,
**dadurch gekennzeichnet, dass**
der oder jeder der Informationsindikatoren eine Ausrichtung aufweist, wobei das zuvor bestimmte Kriterium die Ausrichtung des Informationsindikators beinhaltet, wobei das Bildverarbeitungsmittel konfiguriert ist, um die erfassten Bildszenendaten zu analysieren, um zu bestimmen, ob der eine oder die mehreren Informationsindikatoren in einem schrägen Winkel ausgerichtet sind, und wobei einem Informationsindikator, der in einem schrägen Winkel ausgerichtet ist, eine niedrige Priorität zugewiesen wird.

2. System nach Anspruch 1, wobei das zuvor bestimmte Kriterium die relativen Positionen der entsprechenden Bereiche in der Bildszene (60) beinhaltet.

3. System nach Anspruch 2, wobei das Zuweisungsmittel konfiguriert ist, um die Priorität in der Reihenfolge zuzuweisen, in der das Fahrzeug die entsprechenden Bereiche in der Bildszene passiert.

4. System nach Anspruch 1, wobei jeder der Informationsindikatoren eine Art aufweist und wobei das zuvor bestimmte Kriterium die Art des Informationsindikators beinhaltet.

5. System nach Anspruch 4, wobei die Art aus einer Gruppe ausgewählt ist, die Folgendes umfasst: Anweisung, Warnung und Informationen, optional wobei die Priorität durch die Art gemäß einer Prioritätsreihenfolge von (i) Anweisung, (ii) Warnung, (iii) Informationen zugewiesen wird.

6. System nach einem der Ansprüche 1 bis 5, das ein Satellitennavigationsmittel zum Bereitstellen einer Angabe eines Ortes und/oder einer Route des Fahrzeugs umfasst, wobei das Zuweisungsmittel konfiguriert ist, um den mehreren Informationsausgaben gemäß des Orts und/oder der Route eine Priorität zuzuweisen.

7. System nach einem der Ansprüche 1 bis 6, wobei das zuvor bestimmte Kriterium eine fahrzeugspezifische Einschränkung beinhaltet, wobei das System optional Mittel zum Bestimmen umfasst, ob der eine oder die mehreren Informationsindikatoren fahrzeugspezifisch sind, und wobei das Zuweisungsmittel angeordnet ist, um einer Beschränkung, die als nicht fahrzeugspezifisch bestimmt wird, eine niedrige Priorität zuzuweisen oder sie zu ignorieren.

8. System nach einem der Ansprüche 1 bis 7, wobei das zuvor bestimmte Kriterium eine zeitspezifische Beschränkung beinhaltet, optional wobei das Mittel zum Zuweisen einer Priorität angeordnet ist, um einer Beschränkung, die zu dem aktuellen Zeitpunkt nicht gültig ist, eine niedrige Priorität zuzuweisen oder sie zu ignorieren.

9. System nach einem der Ansprüche 1 bis 8, wobei die Informationsindikatoren in einem Straßenschild (62, 64) und/oder einer Straßenmarkierung in dem Bild der Szene enthalten sind, und/oder wobei die Informationsindikatoren auf einer Werbetafel in der Bildszene enthalten sind.

10. System nach einem der Ansprüche 1 bis 9, wobei das Kommunikationsmittel ein Audiosystem (30) beinhaltet, optional wobei das Audiosystem (30) mehrere Lautsprecher aufweist, von denen jeder eine Position in dem Fahrzeug aufweist, und wobei das Mittel zum Kommunizieren ferner konfiguriert ist, um die Informationsausgaben über die Lautsprecher gemäß der Position der Lautsprecher in dem Fahrzeug zu kommunizieren.

11. System nach einem der Ansprüche 1 bis 10, wobei das Kommunikationsmittel einen visuellen Anzeigebildschirm (26) beinhaltet oder wobei das System ferner Mittel umfasst, um eine Benutzerauswahl der Art des Kommunikationsmittels zu ermöglichen.

12. Verfahren zur Verwendung in einem Fahrzeug, wobei das Verfahren Folgendes umfasst:
Erfassen einer fahrzeugexternen Bildszene (60), wobei die Bildszene (60) mehrere Informationsindikatoren beinhaltet, die jeweils in einem entsprechenden Bereich der Bildszene auftreten und die jeweils Text oder ein Symbol beinhalten;
Erzeugen mehrerer Informationsausgaben, die jeweils einem der mehreren Informationsindikatoren entsprechen;
Zuweisen einer Priorität zu den mehreren Informationsausgaben gemäß einem zuvor bestimmten Kriterium; und
Kommunizieren der mehreren Informationsausgaben an einen Benutzer des Fahrzeugs in einer Sequenz in Abhängigkeit von der zugewiesenen Priorität,
**dadurch gekennzeichnet, dass**
der oder jeder der Informationsindikatoren eine Ausrichtung aufweist, wobei das zuvor bestimmte Kriterium die Ausrichtung des Informationsindikators beinhaltet, wobei das Verfahren ein Analysieren der erfassten Bildszene umfasst, um zu bestimmen, ob der eine oder die mehreren Informationsindikatoren in einem schrägen Winkel ausgerichtet sind, und wobei einem Informationsindikator, der in einem schrägen Winkel ausgerichtet ist, eine niedrige Priorität zugewiesen ist.

13. Fahrzeug, das das System nach einem der Ansprüche 1 bis 11 umfasst.

## Revendications

1. Système à utiliser dans un véhicule ; le système comprenant :
un moyen de capture d'image (40) pour capturer des données de scène d'image à partir d'une scène d'image (60) externe au véhicule, la scène d'image (60) comportant une pluralité d'indicateurs d'informations, dont chacun se produit dans une région correspondante de la scène d'image (60) et dont chacun comporte un texte ou un symbole ;
un moyen de traitement d'image (10) pour générer de multiples sorties d'informations, dont chacune correspond à au moins l'un de la pluralité d'indicateurs d'informations ;
un moyen d'attribution pour attribuer une priorité aux multiples sorties d'informations selon au moins un critère prédéterminé ; et
un moyen pour communiquer les multiples sorties d'informations à un utilisateur du véhicule dans une séquence en fonction de la priorité attribuée,
**caractérisé en ce que**
le ou chacun des indicateurs d'informations présentant une orientation, le critère prédéterminé comportant l'orientation de l'indicateur d'informations, le moyen de traitement d'image étant configuré pour analyser les données de scène d'image capturées pour déterminer si le ou les indicateurs d'informations sont orientés selon un angle oblique, et un indicateur d'informations qui est orienté selon un angle oblique se voyant attribuer une faible priorité.

2. Système selon la revendication 1, le critère prédéterminé comportant les positions relatives des régions correspondantes dans la scène d'image (60).

3. Système selon la revendication 2, le moyen d'attribution étant configuré pour attribuer la priorité dans l'ordre dans lequel le véhicule passe les régions correspondantes dans la scène d'image.

4. Système selon la revendication 1, chacun des indicateurs d'informations présentant un type, et le critère prédéterminé comportant le type d'indicateur d'informations.

5. Système selon la revendication 4, le type étant sélectionné dans un groupe comprenant : l'instruction, l'avertissement et les informations, éventuellement la priorité étant attribuée par type selon un ordre de priorité (i) d'instruction, (ii) d'avertissement, (iii) des informations.

6. Système selon l'une quelconque des revendications 1 à 5, comprenant un moyen de navigation par satellite pour fournir une indication d'un emplacement et/ou d'un itinéraire du véhicule, le moyen d'attribution étant configuré pour attribuer une priorité aux multiples sorties d'informations conformément à l'emplacement et/ou à l'itinéraire.

7. Système selon l'une quelconque des revendications 1 à 6, le critère prédéterminé comportant une restriction spécifique au véhicule, le système comprenant éventuellement un moyen pour déterminer si le ou les indicateurs d'informations sont spécifiques au véhicule, et le moyen d'attribution étant agencé pour attribuer une faible priorité à, ou pour ne pas tenir compte d'une restriction qui est déterminée comme n'étant pas spécifique au véhicule.

8. Système selon l'une quelconque des revendications 1 à 7, le critère prédéterminé comportant une restriction spécifique au temps, éventuellement le moyen pour attribuer une priorité étant agencé pour attribuer une faible priorité à, ou pour ne pas tenir compte d'une restriction qui n'est pas en vigueur au moment actuel.

9. Système selon l'une quelconque des revendications 1 à 8, les indicateurs d'informations étant compris dans un panneau routier (62, 64) et/ou dans un marquage au sol dans l'image de la scène, et/ou les indicateurs d'informations étant compris dans un panneau publicitaire dans la scène d'image.

10. Système selon l'une quelconque des revendications 1 à 9, le moyen de communication comportant un système audio (30), éventuellement le système audio (30) présentant de multiples haut-parleurs présentant chacun une position dans le véhicule, et le moyen pour communiquer étant configuré en outre pour communiquer les sorties d'informations par l'intermédiaire des haut-parleurs selon la position des haut-parleurs dans le véhicule.

11. Système selon l'une quelconque des revendications 1 à 10, le moyen de communication comportant un écran d'affichage visuel (26), ou le système comprenant en outre un moyen pour permettre la sélection par l'utilisateur du type de moyen de communication.

12. Procédé à utiliser dans un véhicule ; le procédé comprenant :
la capture d'une scène d'image (60) externe au véhicule, la scène d'image (60) comportant une pluralité d'indicateurs d'informations, dont chacun se produit dans une région correspondante de la scène d'image et dont chacun comporte du texte ou un symbole ;
la génération de multiples sorties d'informations, dont chacune correspond à l'un de la pluralité d'indicateurs d'informations ;
l'attribution d'une priorité aux multiples sorties d'informations selon un critère prédéterminé ; et
la communication des multiples sorties d'informations à un utilisateur du véhicule dans une séquence en fonction de la priorité attribuée,
**caractérisé en ce que**
le ou chacun des indicateurs d'information présentant une orientation,
le critère prédéterminé comportant l'orientation de l'indicateur d'informations, le procédé comprenant l'analyse de la scène d'image capturée pour déterminer si le ou les indicateurs d'informations sont orientés selon un angle oblique, et un indicateur d'informations qui est orienté selon un angle oblique se voyant attribuer une faible priorité.

13. Véhicule comprenant le système selon l'une quelconque des revendications 1 à 11.
